# EUROPÄISCHE PATENTANMELDUNG

(11) **EP 0 947 823 A2**
(43) Veröffentlichungstag der Anmeldung: **06.10.1999**
(21) Anmeldenummer: 99101241.0
(22) Anmeldetag: 22.01.1999
(51) Int. Cl.: G01N 21/55, G01N 21/64

(54) **Vorrichtung zum Nachweis eines Fluoreszenzfarbstoffs**

(30) Priorität: 03.04.1998 DE 19815109
(71) Anmelder: BODENSEEWERK PERKIN-ELMER GMBH, D-88662 Überlingen (DE)
(72) Erfinder: Wulf, Jürgen, Dr., 88662 Überlingen (DE)
(74) Vertreter: Grünecker, Kinkeldey, Stockmair & Schwanhäusser Anwaltssozietät

(57) **Zusammenfassung**

Die Erfindung betrifft eine Vorrichtung zum Nachweis eines Fluoreszenzfarbstoff in Proben, mit einer Einrichtung zum Anregen des nachzuweisenden Fluoreszenzfarbstoffs, die eine zum Aufbringen von Proben vorgesehene Oberfläche und eine Anregungslichteinkopplungseinrichtung, durch die Anregungslicht aus einer vorbestimmten Einstrahlrichtung in die Einrichtung derart einkoppelbar ist, daß der nachzuweisende Fluoreszenzfarbstoff in aufgebrachten Proben mittels eines evaneszenten Feldes des eingekoppelten Lichts anregbar ist, aufweist, und einer Einrichtung zum Detektieren von Fluoreszenzstrahlung, die von dem nachzuweisenden Fluoreszenzfarbstoff emittiert worden ist. Die Erfindung zeichnet sich dadurch aus, daß die Einrichtung zum Anregen des nachzuweisenden Fluoreszenzfarbstoffs so vorgesehen ist, daß die Oberfläche zum Aufbringen von Proben relativ zu der Einstrahlrichtung bewegbar ist, derart, daß der nachzuweisende Fluoreszenzfarbstoff in unterschiedlichen Teilbereichen der Oberfläche anregbar ist.

## Beschreibung

Die Erfindung betrifft eine Vorrichtung zum Nachweis eines Fluoreszenzfarbstoffs in Proben, mit einer Einrichtung zum Anregen des nachzuweisenden Fluoreszenzfarbstoffs, die eine zum Aufbringen von Proben vorgesehene Oberfläche und eine Anregungslichteinkopplungseinrichtung, durch die Anregungslicht aus einer vorbestimmten Einstrahlrichtung in die Einrichtung derart einkoppelbar ist, daß der nachzuweisende Fluoreszenzfarbstoff in aufgebrachten Proben mittels eines evaneszenten Feldes des eingekoppelten Lichts anregbar ist, aufweist, und einer Einrichtung zum Detektieren von Fluoreszenzstrahlung, die von dem nachzuweisenden Fluoreszenzfarbstoff emittiert worden ist.

Eine derartige Vorrichtung ist aus dem Artikel "A Planar lndium Phosphate Monomode Waveguide Evanescent Field Immunosensor" von A.N. Sloper, J.K. Deacon und M.T. Flanagan, in Sensors and Actuators, B1 (1990), Seiten 589-591, bekannt.

Insbesondere ist in diesem Artikel eine erste Ausführungsform offenbart, in welcher ein Dünnfilm-Wellenleiter auf einem Glassubstrat vorgesehen ist. Durch eine gegenüber dem Dünnfilm-Wellenleiter ortsfeste Anregungslichteinkopplungseinrichtung wird monochromatisches Laserlicht in den Dünnfilm-Wellenleiter so eingekoppelt, daß es parallel zur Oberfläche des Dünnfilm-Wellenleiters durch denselben geleitet wird. Fluoreszenzfarbstoff, der in einer auf dem Dünnfilm-Wellenleiter aufgebrachten Probe enthalten ist, wird durch das evaneszente Feld der sich entlang des Dünnfilm-Wellenleiters fortpflanzenden Laserstrahlung angeregt. Die durch den Fluoreszenzfarbstoff emittierte Fluoreszenzstrahlung wird schließlich mit einer Photomultipliereinrichtung nachgewiesen.

Weiterhin offenbart dieser Artikel eine zweite Ausführungsform der oben beschriebenen Vorrichtung, in welcher die Einrichtung zum Anregen des nachzuweisenden Fluoreszenzfarbstoffs in Form einer Glasplatte mit einer Anregungslichteinkopplungseinrichtung vorgesehen ist, wobei monochromatisches Laserlicht aus einer Lichtquelle, die gegenüber der Glasplatte ortsfest vorgesehen ist, durch die Anregungslichteinkopplungseinrichtung so in die Glasplatte eingekoppelt wird, daß es unter Totalreflexion durch die Glasplatte geleitet wird.

Wie im Fall des Dünnfilm-Wellenleiters wird auch in dieser Ausführungsform ein Fluoreszenzfarbstoff, der in einer auf der Glasplatte aufgebrachten Probe enthalten ist, durch das evaneszente Feld der Laserstrahlung angeregt. Die aus dieser Anregung resultierende Fluoreszenzstrahlung wird schließlich wiederum durch eine Photomultipliereinrichtung nachgewiesen.

Ein Nachteil beider aus dem Stand der Technik bekannter Ausführungsformen liegt allerdings darin, daß diese Ausführungsformen im praktischen Einsatz, also bei der Untersuchung einer Mehrzahl von Proben, nur sehr umständlich handhabbar sind. Insbesondere muß nach Untersuchung einer jeden Probe der Dünnfilm-Wellenleiter bzw. die Glasplatte gereinigt werden, eine neue Probe aufgebracht werden und der Dünnfilm-Wellenleiter bzw. die Glasplatte mit der aufgebrachten Probe in bezug auf die Lichtquelle und die Detektionseinrichtung justiert werden. Demnach ist eine Untersuchung einer Mehrzahl von Proben mit der aus dem Stand der Technik bekannten Vorrichtung sehr zeitaufwendig.

Angesichts dieses Nachteils der Vorrichtungen gemäß dem Stand der Technik liegt der Erfindung die Aufgabe zugrunde, die Handhabbarkeit der bekannten Vorrichtung zum Nachweis eines Fluoreszenzfarbstoffs bzw. mehrerer Fluoreszenzfarbstoffe, insbesondere im Hinblick auf eine Untersuchung einer Mehrzahl von Proben, zu verbessern.

Diese Aufgabe wird durch eine Vorrichtung der eingangs genannten Art gelöst, die sich dadurch auszeichnet, daß die Einrichtung zum Anregen des nachzuweisenden Fluoreszenzfarbstoffs vorgesehen ist, derart, daß die Oberfläche zum Aufbringen von Proben relativ zu der Einstrahlrichtung so bewegbar ist, daß der nachzuweisende Fluoreszenzfarostoff in unterschiedlichen Teilbereichen der Oberfläche anregbar ist.

Dadurch, daß die Einrichtung zum Anregen gegenüber der Einstrahlrichtung bewegbar ist, können auf der Oberfläche zum Aufbringen von Proben eine Mehrzahl von Proben gleichzeitig aufgebracht werden, und der entsprechende Fluoreszenzfarbstoff in diesen Proben in einer gegebenen Reihenfolge angeregt werden, und schließlich die durch den Fluoreszenzfarbstoff emittierte Fluoreszenzstrahlung mittels der Einrichtung zum Detektieren der Fluoreszenzstrahlung nachgewiesen werden.

Gemäß einer bevorzugten Ausgestaltung der Erfindung liegt die Einrichtung zum Detektieren der Oberfläche so gegenüber, daß bei Durchführung einer vollständigen Bewegung der Oberfläche diese vollständig abgetastet wird. Hierdurch ist es möglich, überall auf der Oberfläche der Einrichtung zum Anregen von Fluoreszenzfarbstoff Proben aufzubringen, wodurch die Oberfläche bestmöglich ausgenutzt wird.

Die Einrichtung zum Detektieren kann hierbei beispielsweise ein lineares Photodiodenfeld oder eine CCD-Zeile aufweisen. Alternativ kann die Einrichtung zum Detektieren einen Detektor, insbesondere eine Photomultiplierröhre, der oder die entlang einer vorbestimmten Richtung zum Abtasten der Oberfläche führbar angeordnet ist, umfassen. Derartig angepaßte Detektionseinrichtungen ermöglichen es auf einfache Weise, daß die gesamte Oberfläche der Einrichtung zum Anregen von Fluoreszenzfarbstoff vollständig abgetastet werden kann, wodurch sichergestellt werden kann, daß alle aufgebrachten Proben berücksichtigt werden.

Falls erforderlich und zur Erhöhung der Qualität des Detektionssignal kann die Einrichtung zum Detektieren ein Linsensystem und/oder eine auf die Wellenlänge der von ihr nachzuweisenden Fluoreszenzstrahlung abgestimmte Farbfiltereinrichtung aufweisen. Durch das Linsensystem ist es möglich, die emittierte Fluoreszenzstrahlung auf die Einrichtung zum Detektieren zu fokussieren und dadurch eine genauere Ortsauflösung auf der Detektionseinrichtung zu erzielen. Durch die an die Fluoreszenzstrahlung angepaßte Filtereinrichtung kann sichergestellt werden, daß von der Detektionseinrichtung nur Fluoreszenzstrahlung nachgewiesen wird, und das Detektionsergebnis nicht durch andere Strahlung, wie beispielsweise gestreute Anregungsstrahlung, beeinflußt wird.

Gemäß einer ersten Alternative kann die Einrichtung zum Anregen des nachzuweisenden Fluoreszenzfarbstoffs so vorgesehen werden, daß ihre Oberfläche relativ zur Einstrahlrichtung eine Rotationsbewegung ausführt. In diesem Fall kann die Oberfläche vorteilhafterweise rotationssymmetrisch, insbesondere kreisringförmig, ausgebildet sein. Diese Anordnung ermöglicht eine besonders effektive Ausnutzung der zur Verfügung stehenden Oberfläche. Darüber hinaus kann eine Rotationsbewegung der Oberfläche mit relativ einfachen mechanischen Mitteln realisiert werden.

Vorteilhafterweise kann wenigstens eine weitere Einrichtung zum Detektieren vorgesehen werden, wobei insbesondere die erste Einrichtung zum Detektieren und jede weitere Einrichtung zum Detektieren parallel zur Oberfläche und unter einem vorbestimmten Winkel zueinander angeordnet sein können. Durch diese Maßnahme kann die Meßzeit, entsprechend der Zahl der zusätzlich vorgesehenen Einrichtungen zum Detektieren, weiter verkürzt werden. Diese wenigstens eine weitere Einrichtung zum Detektieren kann ebenfalls ein Linsensystem und/oder eine auf die Wellenlänge der von ihr nachzuweisenden Fluoreszenzstrahlung abgestimmte Farbfiltereinrichtung aufweisen.

Hierbei können die erste und/oder die wenigstens eine weitere Einrichtung zum Detektieren mit verschiedenen Farbfiltereinrichtungen versehen werden. So können dann ein Fluoreszenzfarbstoff, der Fluoreszenzstrahlung bei verschiedenen Wellenlängen emittiert oder alternativ verschiedene Fluoreszenzfarbstoffe gleichzeitig nachgewiesen werden. Hierdurch kann gegenüber den aus dem Stand der Technik bekannten Vorrichtung ebenfalls eine Verkürzung der Meßzeit erreicht werden.

Falls im Zusammenhang mit einer Oberfläche, die eine Rotationsbewegung durchführt, lineare Photodiodenfelder oder die oder CCD-Zeilen verwendet werden, ist es vorteilhart, diese in im wesentlichen radialer Richtung auszurichten. Analog hierzu ist bei Verwendung einer Photomultiplierröhre diese in im wesentlichen radialer Richtung zum Abtasten der Oberfläche führbar vorzusehen. Durch diese Maßnahme kann die Anzahl der insgesamt eingesetzten Einrichtungen zum Detektieren maximiert werden.

Gemäß einer zweiten Alternative kann die Einrichtung zum Anregen des nachzuweisenden Fluoreszenzfarbstoffs so vorgesehen werden, daß die Oberfläche relativ zur Einstrahlrichtung eine Translationsbewegung ausführt.

Hierbei ist es aus Gründen einer einfachen Herstellung vorteilhaft, die Oberfläche im wesentlichen rechteckig auszubilden.

In diesem Fall können bei Verwendung von linearen Photodiodenfelder oder CCD-Zeilen diese zweckmäßigerweise im wesentlichen senkrecht zur Richtung der Translationsbewegung ausgerichtet sein. Analog wäre eine Photomultiplierröhre so vorzusehen, daß sie im wesentlichen senkrecht zur Richtung der Translationsbewegung zum Abtasten der Oberfläche führbar ist. Für den Fall der Translationsbewegung ergeben diese Ausführungen die optimale Ausnutzung der Meßzeit. Darüber hinaus sind sie auch mechanisch am einfachsten zu verwirklichen.

Gemäß einer besonders bevorzugten Weiterbildung kann die oder jede Einrichtung zum Detektieren und die Bewegung der Oberfläche synchronisiert werden, so daß jeder Ort auf der Oberfläche mit einem Detektionsergebnis von der bzw. jeder Einrichtung zum Detektieren in Beziehung gesetzt wird. Hierdurch kann nicht nur eine statistische Auswertung der Fluoreszenzstrahlung der Mehrzahl der Proben in ihrer Gesamtheit sondern auch eine genaue Zuordnung der detektierten Fluoreszenzstrahlung zu der entsprechenden Probe erhalten werden.

Die Anregungslichteinkopplungseinrichtung kann in allen zuvor genannten Ausführungen so vorgesehen werden, daß sie relativ zur Oberfläche oder daß sie relativ zur Einstrahlrichtung feststeht.

Vorzugsweise kann die Anregungslichteinkopplungseinrichtung in Form eines Gitterkopplers, beispielsweise in Form eines holographischen Gitters, oder alternativ in Form eines Spiegels ausgebildet sein.

In den zuvor genannten Ausbildungen der Erfindung kann die Einrichtung zum Anregen des nachzuweisenden Fluoreszenzfarbstoffs einen auf einem Substrat vorgesehenen Dünnfilm-Wellenleiter oder alternativ eine Glasplatte aufweisen.

Im Fall des Dünnfilm-Wellenleiters koppelt die Anregungslichteinkopplungseinrichtung das Licht zur Anregung des nachzuweisenden Fluoreszenzfarbstoffs so in den Dünnfilm-Wellenleiter ein, daß es parallel zur Oberfläche des Dünnfilm-Wellenleiters durch denselben geleitet wird. Vorteilhafterweise kann das Licht zur Anregung so eingekoppelt werden, daß sich nur eine Mode des Lichts parallel zur Oberfläche des Dünnfilm-Wellenleiters ausbreitet. Hierzu darf der Dünnfilm-Wellenleiter eine vorbestimmte Dicke nicht überschreiten und das Anregungslicht muß unter einem vorbestimmten Winkel eingekoppelt werden.

Im Fall einer Glasplatte koppelt die Anregungslichteinkopplungseinrichtung das Licht zur Anregung des nachzuweisenden Fluoreszenzfarbstoffs so in die Glasplatte ein, daß es unter Totalreflexion durch dieselbe geleitet wird.

Gemäß einer vorteilhaften Weiterbildung können eine Auskopplungseinrichtung zur Auskopplung der in die Einrichtung zurückgekoppelten Fluoreszenzstrahlung, beispielsweise in Form eines Gitterkopplers, insbesondere in Form eines holographischen Gitterkopplers, und eine Einrichtung zum Detektieren dieser Strahlung vorgesehen werden. Durch ein derartiges Gitter kann das Emissionsspektrum dispergiert werden, so daß mit der Einrichtung zum Detektieren dieser Strahlung zusätzlich das Summenspektrum aller Fluoreszenzfarbstoffe ermittelt werden kann.

Gemäß einer vorteilhaften Weiterbildung der obengenannten Ausführungen kann ein Hohlraumdetektor, wie er in der am 23.03.1998 vom Anmelder der vorliegenden Anmeldung eingereichten deutschen Patentanmeldung beschrieben ist, verwendet werden.

Weitere vorteilhafte Merkmale der Erfindung ergeben sich aus der Beschreibung bevorzugter Ausführungsformen der Erfindung unter Bezugnahme auf die Zeichnungen. Es zeigen:
- Fig. 1: eine schematische Schnittansicht einer ersten Ausführungsform der vorliegenden Erfindung;
- Fig. 2: eine schematische Schnittansicht einer zweiten Ausführungsform der vorliegenden Erfindung;
- Fig. 3: eine schematische Schnittansicht einer dritten Ausführungsform der vorliegenden Erfindung;
- Fig. 4: eine schematische Schnittansicht einer vierten Ausführungsform der vorliegenden Erfindung; und
- Fig. 5a und 5b: eine schematische Schnittansicht einer und eine schematische Draufsicht auf eine fünfte Ausführungsform der vorliegenden Erfindung.

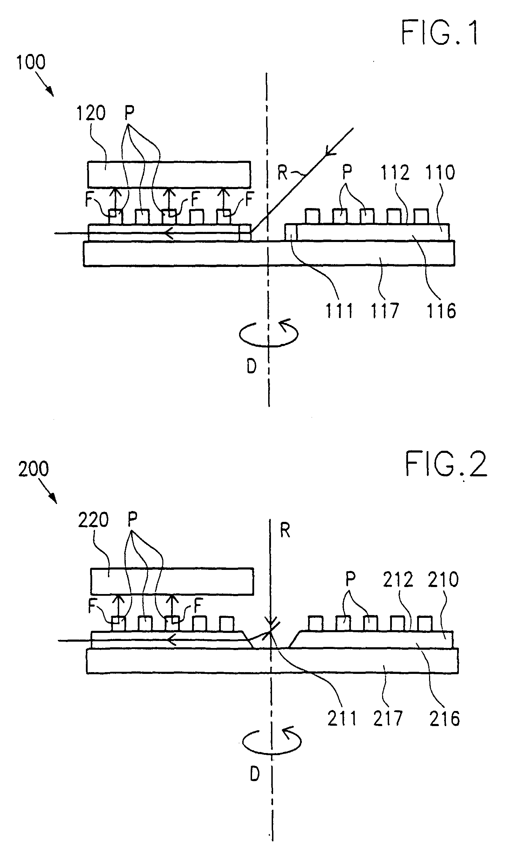

In Fig. 1 ist eine erste Ausführungsform einer Vorrichtung 100 zum Nachweis eines Fluoreszenzfarbstoffs F in Proben P gemäß der vorliegenden Erfindung gezeigt.

Die Vorrichtung 100 umfaßt eine Einrichtung 110 zum Anregen des in den Proben P enthaltenen Fluoreszenzfarbstoffs F, die in Form eines Dünnfilm-Wellenleiters 116, der auf einem Substrat 117 aufgebracht ist, vorgesehen ist.

Das Substrat 117 ist gemäß Fig. 1 in Form einer Kreisscheibe vorgesehen, die derart gelagert ist, daß sie um ihren Mittelpunkt eine Drehbewegung D ausführen kann.

Auf dem Substrat 117 ist der Dünnfilm-Wellenleiter 116, der eine Ringscheibenform aufweist, angeordnet, wobei das Zentrum der Ringscheibe auf der Rotationsachse liegt.

Auf der Innenseite der Ringscheibe ist eine Lichteinkopplungseinrichtung 111, durch die Anregungslicht aus einer vorbestimmten Einstrahlrichtung R in den Dünnfilm-Wellenleiter 116 eingekoppelt werden kann, vorgesehen. Gemäß der in Fig. 1 gezeigten Ausführungsform wird hierzu ein Gitterkoppler, der konzentrisch um die Rotationsachse ausgebildet ist, verwendet. Wenn das Licht unter einem bestimmten, festen Winkel auf den Gitterkoppler 111 auftrifft, wird es so in den Dünnfilm-Wellenleiter eingekoppelt, daß es sich parallel zur Oberfläche des Dünnfilm-Wellenleiters ausbreitet.

Vorzugsweise kann die Einkopplungseinrichtung 111 in Form eines holographisch hergestellten ringförmigen Gitters ausgebildet sein.

Weiterhin liegt die Dicke des Dünnfilm-Wellenleiters 116, abhängig vom verwendeten Material, im Bereich einiger 10 nm bis zu mehreren µm, so daß möglich ist, durch den Gitterkoppler 111, Anregungslicht derart in den Dünnfilm-Wellenleiter einzukoppeln, daß sich nur eine Mode in selbem ausbreitet.

Beispielsweise sollte für Ta₂ 0₅ mit einer Brechungsindex n ≈2,1 die Dicke im Bereich von 100 nm liegen, für synthetisches Quarzglas mit einem Brechungsindex von n ≈ 1,45 liegt die Dicke im Bereich von 1-2 µm.

Der Dünnfilm-Wellenleiter 116 umfaßt weiterhin eine Oberfläche 112, auf die mehrere in bezug auf einen Fluoreszenzfarbstoff zu untersuchende Proben P, von denen gemäß Fig. 1 zehn dargestellt sind, aufgebracht werden.

Außerdem umfaßt die Vorrichtung 100 eine Detektionseinrichtung 120, die in Form einer linearen, in radialer Richtung positionierten Detektorzeile, beispielsweise in Form eines linearen Diodenfelds oder einer CCD-Zeile, vorgesehen ist.

Im folgenden wird kurz die Funktionsweise der Vorrichtung 100 beschrieben.

Beim Betrieb der Vorrichtung wird aus einer Einstrahlrichtung R kommendes Licht, das die Anregungswellenlänge enthält, beispielsweise monochromatisches Laserlicht der Anregungswellenlänge, in den Dünnfilm-Wellenleiter 116 eingekoppelt. In dem Dünnfilm-Wellenleiter 116 pflanzt sich das monochromatische Laserlicht parallel zur Oberfläche 112 fort, bis es schließlich aus dem äußeren Scheibenrand des Dünnfilm-Wellenleiters 116 austritt.

Fluoreszenzfarbstoff F, der in den auf dem Dünnfilm-Wellenleiter aufgebrachten Proben P enthalten ist, wird durch das evaneszente Feld der sich entlang des Dünnfilm-Wellenleiters 116 bewegenden Laserstrahlung angeregt. Die durch den Fluoreszenzfarbstoff F emittierte Fluoreszenzstrahlung wird schließlich durch die Detektionseinrichtung 120 nachgewiesen.

Durch die Drehbewegung D wird die gesamte Oberfläche 112 von der Detektionseinrichtung abgetastet. Demnach werden Detektionsergebnisse für den Fluoreszenzfarbstoff F, der in den über die gesamte Oberfläche 112 verteilten Proben enthalten ist, erhalten.

Weiterhin sind in der Vorrichtung 100 die Einrichtung 120 zum Detektieren und die Bewegung der Oberfläche 112, die von der Drehbewegung der Anregungseinrichtung 110 herrührt, synchronisiert. Hierdurch wird jeder Ort auf der Oberfläche 112 und damit auch jede Probe mit einem Detektionsergebnis von der Detektionseinrichtung 120 in Beziehung gesetzt.

Die in Fig.1 gezeigte Vorrichtung 100 kann auf vielfältige Weise modifiziert werden.

So kann beispielsweise der Dünnfilm-Wellenleiter durch eine Glasplatte ersetzt werden, in die das Licht zur Anregung des nachzuweisenden Fluoreszenzfarbstoffs so eingekoppelt wird, daß es unter Totalreflexion durch dieselbe geleitet wird. Diese Glasplatte hat vorzugsweise die Dicke von einigen mm.

In einer derartigen Anregungseinrichtung wird das evaneszente Feld der Laserstrahlung an den Orten der Totalreflexion des monochromatischen Laserlichts zur Anregung des Fluoreszenzfarbstoffs genützt.

Die von dem angeregten Fluoreszenzfarbstoff bei einer Abregung abgegebene Fluoreszenzstrahlung wird schließlich durch die Detektionseinrichtung 120 nachgewiesen.

In diesem Fall kann das Anregungslicht durch einen Prismenkoppler, der ringförmig und mit der Scheibe fest verbunden ausgebildet ist, eingekoppelt werden.

Weiterhin kann der holographische Gitterkoppler 111 durch einen herkömmlichen Gitterkoppler, der beispielsweise durch bekannte Ätzprozesse hergestellt wird, ersetzt werden.

Falls lediglich eine statistische Untersuchung des Fluoreszenzfarbstoffs F in den Proben durchgeführt werden soll, anders ausgedrückt, falls eine Zuordnung der Fluoreszenzstrahlung zu bestimmten Proben nicht erforderlich ist, muß die Bewegung der Oberfläche mit der Detektionseinrichtung nicht synchronisiert werden.

Weiterhin kann die in radialer Richtung positionierte Detektorzeile, d.h. das lineare Diodenfeld oder die CCD-Zeile, durch eine Photomultiplierröhre ersetzt werden. Diese Photomultiplierröhre wird dann über den gesamten Radius der Scheibe bewegbar angeordnet. Selbstverständlich kann auch in diesem Fall die Bewegung der Photomultiplierröhre über den Radius der Scheibe mit der Bewegung der Oberfläche synchronisiert werden, so daß eine Zuordnung der detektierten Strahlung zu bestimmten Proben möglich ist.

Neben den oben beschriebenen Detektionseinrichtungen kann auch ein sogenannter Hohlraumdetektor, wie er in der am 23.03.1998 vom Anmelder der vorliegenden Anmeldung eingereichten deutschen Patentanmeldung offenbart ist, verwendet werden.

Ein derartiger Hohlraumdetektor umfaßt für die Anwendung in der in Fig. 1 beschriebene Anordnung einen Hohlraum, der vorzugsweise kugelförmig ausgebildet ist. Dieser Hohlraum umfaßt eine erste Öffnung, die vorzugsweise spaltförmig ausgebildet ist.

Der Hohlraum des Hohlraumdetektors wird hierbei so gegenüber der Einrichtung zum Anregen positioniert, daß die erste Öffnung des Hohlraums bei Bewegung der Einrichtung zum Anregen vollständig die Oberfläche, auf der Proben aufbringbar sind, überstreicht. Weiterhin ist der Hohlraum so vorgesehen, daß der Spalt dem Bereich der Oberfläche, in dem die Fluoreszenzstrahlung von dem Fluoreszenzfarbstoff emittiert wird, gegenüberliegt.

Der Hohlraum umfaßt eine hochreflektive innere Oberfläche, die beispielsweise Bariumsulfat oder Spektralon umfassen. Durch diese spezielle Beschichtung kann eine Reflektivität der inneren Oberfläche von 99,8 % erzielt werden.

Außerdem ist in dem Hohlraum eine zweite Öffnung vorgesehen, in die ein erster Detektor zum Detektieren von Fluoreszenzstrahlung, die durch den nachzuweisenden Fluoreszenzfarbstoff emittiert worden ist, beispielsweise in Form einer Photomultipliereinrichtung, eingesetzt ist.

In dieser Anordnung wird die von dem angeregten Fluoreszenzfarbstoff abgegebene Fluoreszenzstrahlung wird in den Hohlraum eingestrahlt, und schließlich nach mehreren Totalreflexionen an der hochreflektiven Oberfläche durch den Detektor nachgewiesen.

Da der Teil der Fläche, auf dem die Probe schließlich angeregt wird, der ersten Öffnung des Hohlraums unmittelbar gegenüberliegt und außerdem die Fluoreszenzstrahlung im allgemeinen keine Vorzugsrichtung hat, werden in der vorliegenden Anordnung etwa 50 % der Intensität der Fluoreszenzstrahlung in den Hohlraum, wo sie schließlich nachgewiesen werden kann, eingestrahlt.

Anders ausgedrückt, wird in der erlindungsgemäßen Weiterbildung die Fluoreszenzstrahlung in dem Hohlraum aus einem Raumwinkel von nahezu 2π Steradien gesammelt und dort detektiert.

Folglich kann in dieser Weiterbildung, im Vergleich zu aus dem Stand der Technik bekannten Vorrichtungen, in denen Linsensysteme oder Lichtleiter mit entsprechenden Detektoren eingesetzt worden sind, der Raumwinkel, aus dem Fluoreszenzstrahlung gesammelt wird, stark erhöht werden, wodurch eine erhöhte Nachweiswahrscheinlichkeit erzielt werden kann.

Der Hohlraum kann auch andere geometrische Formen, wie beispielsweise eine Würfelform oder dergleichen, aufweisen. Im Vergleich zur kugelförmigen Anordnung kann sich allerdings die Anzahl der Reflexionen der Fluoreszenzstrahlung in dem Hohlraum bis zum Nachweis durch den Detektor erhöhen, wodurch sich u.U. die Reflexionsverluste in dem Hohlraum erhöhen können.

Der Detektor des Hohlraumdetektors ist in Form eines Photomultipliers vorgesehen. Vorzugsweise kann vor den Photomultiplier ein Farbfilter gesetzt werden, der auf die von dem nachzuweisenden Fluoreszenzfarbstoff F emittierte Wellenlänge abgestimmt ist.

Falls die Reflexionsverluste in dem Hohlraum weiter reduziert werden sollen, bietet es sich an, den Detektor lichtdicht in die Öffnung einzusetzen. Weiterhin kann, falls es erforderlich ist, der Detektor mit einer Kollimationsoptik versehen werden.

Vor der ersten Öffnung des Hohlraums kann darüber hinaus eine Sperrfiltereinrichtung vorgesehen werden. Diese Sperrfiltereinrichtung ist für das zur Anregung verwendete Licht, das in Richtung des Hohlraums gestreut wird, undurchlässig und für die zu detektierende Fluoreszenzstrahlung durchlässig ist.

Neben dem ersten Detektor können zusätzliche Detektoren, die in entsprechenden zusätzlichen Öffnungen in dem Hohlraum eingesetzt sind, vorgesehen werden.

Diese zusätzlichen Detektoren können baugleich mit dem ersten Detektor ausgebildet sein oder speziell an eine Fluoreszenzstrahlung angepaßt werden, die sich in ihrer Wellenlänge von der mit dem ersten Detektor nachzuweisenden Fluoreszenzstrahlung unterscheidet.

Mit diesen zusätzlichen Detektoren ist es einerseits möglich, Fluoreszenzstrahlung von dem gleichen Fluoreszenzfarbstoff, die aus unterschiedlichen Anregungszuständen resultiert, nachzuweisen.

Außerdem können die Detektoren auch so vorgesehen werden, daß sie zum gleichzeitigen Nachweis wenigstens eines weiteren Fluoreszenzfarbstoffs vorgesehen sind. Hierzu kann es u.U. erforderlich sein, daß Licht mit verschiedenen Anregungswellenlängen über die Einkopplungseinrichtung eingekoppelt wird.

Selbstverständlich sind auch beliebige Kombinationen aus den beiden oben beschriebenen Betriebsverfahren möglich; d.h. mit dieser Anordnung kann die Fluoreszenzstrahlung mehrerer Fluoreszenzfarbstoffe mit jeweils verschiedenen Wellenlängen detektiert werden.

Während in der in Zusammenhang mit Fig. 1 beschriebenen Ausführungsform lediglich ein monochromatischer Strahl durch die Lichteinkopplungseinrichtung in den Dünnfilm-Wellenleiter eingekoppelt wird, kann auch die in Fig. 1 gezeigte Vorrichtung mit zwei oder mehreren Anregungswellenlängen betrieben werden. Hierzu kann beispielsweise die Anregung in der Frequenzdomäne moduliert werden, und die Fluoreszenzstrahlung mit der jeweiligen Frequenz durch eine entsprechend gesteuerte Detektionseinrichtung detektiert werden.

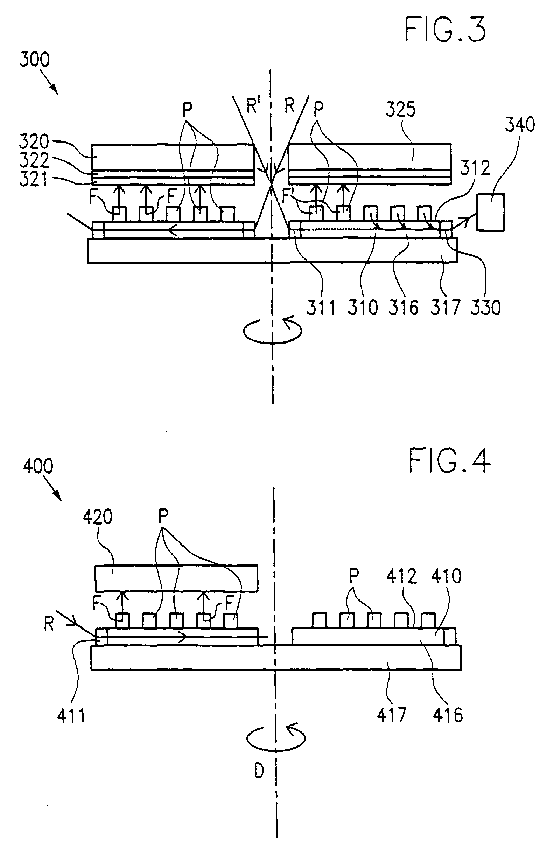

Um die beschriebene Vorrichtung zum Nachweis von Fluoreszenzstrahlung eines bestimmten Fluoreszenzfarbstoffs einzusetzen, sind die Anregungslichtquelle und, falls wie in der noch zu beschreibenden und in Fig. 3 gezeigten Ausführungsform vorgesehen, ein Farbfilter vor der Detektionseinrichtung an den Fluoreszenzfarbstoff anzupassen.

Zum Nachweis von Fluoreszein, das bei 488 nm zur Fluoreszenz angeregt werden kann, muß Licht dieser Wellenlänge, beispielsweise durch einen Argonlaser in die Vorrichtung eingestrahlt werden. Da die Fluoreszenzstrahlung bei 520 nm emittiert wird, müßte ein verwendeter Farbfilter in diesem Bereich durchlässig sein. Analoges gilt für CY5, das bei 633 nm angeregt werden kann und bei 670 nm Fluoreszenzstrahlung emittiert.

In Fig. 2 ist eine zweite Ausführungsform einer Vorrichtung 200 zum Nachweis eines Fluoreszenzfarbstoffs F in Proben P dargestellt.

Diese Vorrichtung unterscheidet sich von der in Fig. 1 gezeigten dadurch, daß anstelle des Gitterkopplers 111 ein Einkopplungsspiegel 211 verwendet wird und weiterhin der scheibenförmige Dünnfilm-Wellenleiter 216 trapezoidförmig angeschliffen ist. Der Einkopplungsspiegel 211 ist hierbei ortsfest in bezug auf die Einstrahlrichtung R vorgesehen. Alternativ kann allerdings auch ein rotationssymmetrischer Spiegel, beispielsweise in Form eines Kegelstumpfmantels fest mit der Anregungseinrichtung verbunden werden, wodurch sich der Spiegel ebenfalls um die Achse D dreht.

Die übrigen Komponenten sowie die Funktionsweise der Vorrichtung 200 entsprechen den im Zusammenhang mit Fig. 1 erläuterten Komponenten, und um Wiederholungen zu vermeiden, wird in bezug auf diese Komponenten lediglich auf die Beschreibung von Fig. 1 verwiesen. In diesem Zusammenhang bleibt anzumerken, daß sich die Bezugszeichen der einander entsprechenden Komponenten lediglich in ihrer ersten Ziffer unterscheiden.

In Fig. 3 ist eine dritte Ausführungsform einer Vorrichtung 300 zum Nachweis von Fluoreszenzfarbstoff F in Proben P in einer schematischen Schnittansicht dargestellt.

Diese Vorrichtung unterscheidet sich von der in Fig. 1 gezeigten Vorrichtung dadurch, daß die Detektionseinrichtung 320 modifiziert ist und daß zusätzlich zu dieser Detektionseinrichtung 320 eine weitere Detektionseinrichtung 325, eine Auskopplungseinrichtung 330 und eine weitere mit dieser Auskopplungseinrichtung 330 assoziierte Detektionseinrichtung 340 vorgesehen sind.

Um Wiederholungen zu vermeiden, werden im folgenden lediglich diese unterschiedlichen Merkmale erläutert und in bezug auf die verbleibenden Komponenten wird auf die Beschreibung im Zusammenhang mit Fig. 1 verwiesen. Hierbei bleibt anzumerken, daß sich die Bezugszeichen der einander entsprechenden Komponenten lediglich in ihrer ersten Ziffer unterscheiden.

Wie in Fig. 3 angedeutet, weist die Detektionseinrichtung 320 ein Linsen- und/oder Blendensystem 321 auf. Hierdurch kann die emittierte Fluoreszenzstrahlung auf der Detektionseinrichtung fokussiert werden. Demnach kann mit dieser Anordnung die Auflösung der Detektionseinrichtung erhöht werden, was die Möglichkeit eröffnet, die Zahl der Proben auf der Oberfläche 312 gegenüber einer Vorrichtung, die ohne ein Linsen- und/oder Blendensystem betrieben wird, zu erhöhen. Weiterhin umfaßt die Detektionseinrichtung 320 einen an die zu detektierende Fluoreszenzstrahlung 323 angepaßten Farbfilter. Hierdurch kann vermieden werden, daß Strahlung, die nicht von der Fluoreszenz herrührt, in die Detektionseinrichtung 320 eintritt und das Meßergebnis verfälscht.

Neben der Detektionseinrichtung 320 umfaßt die in Fig. 3 dargestellte Ausführungsform eine weitere Detektionseinrichtung 325, die denselben Aufbau wie die Detektionseinrichtung 320 aufweist.

Diese Detektionseinrichtung 325 ist gemäß Fig. 3 der Detektionseinrichtung 325 gegenüberliegend, also um einen Winkel von ungefähr 180° bei Draufsicht auf die Vorrichtung 300, verschoben. Der Winkel von 180° ist hierbei nicht als Beschränkung zu verstehen. Selbstverständlich können die Detektoreinrichtungen auch unter anderen Winkeln zueinander vorgesehen werden.

Die Detektionseinrichtung 325 ist ebenfalls vorgesehen, um von Fluoreszenzfarbstoffen emittierte Fluoreszenzstrahlung nachzuweisen. Analog zu dem aus der Einstrahlrichtung R eingekoppelten Licht wird in der Vorrichtung 300 Licht, das aus R' eingestrahlt wird, in die Anregungseinrichtung 310 eingekoppelt und dieses Licht regt Fluoreszenzfarbstoffe in den Proben, die sich unter der Detektionseinrichtung 325 befinden, an. Dieses Licht kann schließlich durch die Detektionseinrichtung 325 nachgewiesen werden.

Mit der in Fig. 3 gezeigten Anordnung ist es einerseits möglich, wenn die Detektionseinrichtungen 320 und 325 identisch ausgebildet sind, Fluoreszenzstrahlung von dem gleichen Fluoreszenzfarbstoff nachzuweisen, wobei sich die Untersuchungszeit halbiert.

Durch geeignete Wahl der Detektionseinrichtungen 320 und 325, insbesondere der vor diesen Vorrichtungen vorgesehenen Farbfilter, kann Fluoreszenzstrahlung vom gleichen Fluoreszenzfarbstoff, die allerdings aus unterschiedlichen Anregungszuständen resultiert, gleichzeitig nachgewiesen werden. Darüber hinaus können die Farbfiltereinrichtungen und das eingestrahlte Anregungslicht auch so vorgesehen werden, daß ein gleichzeitiger Nachweis wenigstens eines weiteren Fluoreszenzfarbstoffs F' durchgeführt werden kann.

Im Gegensatz zu der in Fig. 1 gezeigten Ausführungsform umfaßt die Ausführungsform nach Fig. 3 außerdem eine Auskopplungseinrichtung 330. Diese Auskopplungseinrichtung ist gemäß Fig. 3 in Form eines konzentrischen holographischen Gitterkopplers, der am Außenrand des Dünnfilm-Wellenleiters angebracht ist, vorgesehen.

Durch diesen an der Peripherie des Dünnfilm-Wellenleiters angebrachten Gitterkopplers kann ein Teil des Fluoreszenzlichts, der in den Dünnfilm-Wellenleite zurückgekoppelt wird, ausgekoppelt werden. Der Gitterkoppler dispergiert das Emissionsspektrum, so daß mit einem weiteren, vorzugsweise linearen CCD-Detektor 340 das Summenspektrum aller Fluoreszenzfarbstoffe spektral erfaßt werden kann.

Obwohl in der dritten Ausführungsform die modifizierte Detektionseinrichtung 320, die zusätzlich vorgesehene weitere Detektionseinrichtung 325, die Auskopplungseinrichtung 330 und die mit ihr assoziierte Detektionseinrichtung 340 gemeinsam in einer gezeigt worden sind, bleibt anzumerken, daß diese Merkmale voneinander unabhängig sind und demnach jedes einzelne dieser Merkmale bei Bedarf engesetzt werden kann, um die im Zusammenhang mit dem betreffenden Merkmal beschriebenen Vorteile zu erlangen.

In Fig. 4 ist eine vierte Ausführungsform einer Vorrichtung 400 zum Nachweis von Fluoreszenzfarbstoff F in einer Probe P dargestellt.

Diese Vorrichtung unterscheidet sich von der in Fig. 1 gezeigten nur dadurch, daß der zum Einkoppeln des Anregungslichts verwendete Gitterkoppler 411 am Außenrand des ringscheibenförmigen Dünnfilm-Wellenleiters 416 vorgesehen ist. Aus dieser Ausführungsform ergibt sich, daß Ein- und Auskopplung vertauscht werden können.

Im übrigen entspricht die in Fig. 4 gezeigte Ausführungsform der in Fig. 1 gezeigten, und um Wiederholungen zu vermeiden, wird in bezug auf die verbleibenden Komponenten lediglich auf die Beschreibung im Zusammenhang mit Fig. 1 verwiesen. Hierbei bleibt anzumerken, daß sich die Bezugszeichen der einander entsprechenden Komponenten lediglich in ihrer ersten Ziffer unterscheiden.

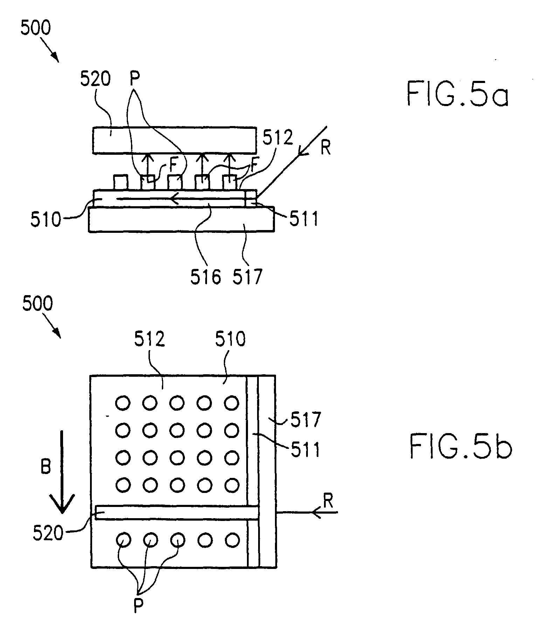

In den Figuren 5a und 5b ist eine fünfte Ausführungsform einer Vorrichtung 500 zum Nachweis von Fluoreszenzfarbstoff F in Proben P in einer schematischen Schnittansicht und einer schematischen Draufsicht dargestellt.

Diese Vorrichtung unterscheidet sich von der in Fig. 1 gezeigten prinzipiell dadurch, daß das Substrat 517 mit dem Dünnfilm-Wellenleiter 516 und der Einkopplungseinrichtung 511 keine Rotationsbewegung um eine Achse, sondern eine Translationsbewegung durchführt.

Zur Vermeidung von Wiederholungen werden im folgenden deshalb lediglich die Merkmale erläutert, die sich aus dieser unterschiedlichen Bewegung ergeben, und ansonsten wird lediglich auf die Beschreibung im Zusammenhang mit Fig. 1 verwiesen. Wiederum unterscheiden sich die Bezugszeichen einander entsprechenden Komponenten nur in ihrer ersten Ziffer.

Da in der Vorrichtung 500 eine Translationsbewegung ausgeführt wird, besteht der wesentliche Unterschied zu den vorherigen gezeigten Ausführungsformen in der Geometrie der Anregungseinrichtung 510, die das Substrats 517, den Dünnfilm-Wellenleiter 516 und die Einkopplungseinrichtung 511 umfaßt.

Wie aus den Figuren 5a und 5b ersichtlich, ist das Substrat 517 in Form eines Rechtecks ausgebildet. Auf diesem Substrat 517 ist der Dünnfilm-Wellenleiter 516, der ebenfalls eine Rechtecksform aufweist, aufgebracht. An einer Seite des Dünnfilm-Wellenleiters 516 schließt sich die Lichteinkopplungseinrichtung 511, die auch hier vorzugsweise in Form eines holographischen Gitters vorgesehen ist, an.

Während die Anregungseinrichtung 510 in bezug auf die Einstrahlrichtung R eine Translationsbewegung in einer zur Einstrahlrichtung senkrechten Richtung durchführt, ist die Detektionseinrichtung 520 ortsfest in bezug auf die Einstrahlrichtung vorgesehen.

Da die Detektionseinrichtung 520 in bezug auf die Einstrahlrichtung R ortsfest ist, ergibt sich aus der unterschiedlichen Bewegung für die Detektionseinrichtung 520 keine Änderung gegenüber den in den vorherigen Ausführungsformen dargestellten Detektionseinrichtungen 120, 220, 320 und 420.

Aufgrund der in Fig. 5b durch einen Pfeil B dargestellten Translationsbewegung der Einrichtung zum Anregen der Fluoreszenzfarbstoffe 510 gegenüber der Detektionseinrichtung 520 wird mit der Detektionseinrichtung 520 die gesamte Oberfläche 512 abgetastet. Demnach kann Fluoreszenzstrahlung aus allen auf der Oberfläche 512 aufgebrachten Proben nachgewiesen werden.

Im übrigen lassen sich aus bei dieser Einrichtung alle im Zusammenhang mit den in den Figuren 1 bis 4 diskutierten Ausführungsformen erläuterten Merkmale, wie beispielsweise eine Auskopplungseinrichtung, eine dieser Auskopplungseinrichtung zugeordnete Detektionseinrichtung, Detektionseinrichtungen, die mit einem Linsen- und/oder Blendensystem und/oder auf die nachzuweisende Fluoreszenzstrahlung abgestimmte Farbfiltereinrichtungen versehen sind, gemeinsam oder unabhängig voneinander einsetzen.

## Patentansprüche

1. Vorrichtung (100; 200; 300; 400; 500) zum Nachweis eines Fluoreszenzfarbstoff (F) in Proben (P), mit
einer Einrichtung (110; 210; 310; 410; 510) zum Anregen des nachzuweisenden Fluoreszenzfarbstoffs (F), die eine zum Aufbringen von Proben (P) vorgesehene Oberfläche (112; 212; 312; 412; 512) und eine Anregungslichteinkopplungseinrichtung (111; 211; 311; 411; 511), durch die Anregungslicht aus einer vorbestimmten Einstrahlrichtung (R) in die Einrichtung (110; 210; 310; 410; 510) derart einkoppelbar ist, daß der nachzuweisende Fluoreszenzfarbstoff (F) in aufgebrachten Proben (P) mittels eines evaneszenten Feldes des eingekoppelten Lichts anregbar ist, aufweist, und
einer Einrichtung (120; 220; 320; 420; 520) zum Detektieren von Fluoreszenzstrahlung, die von dem nachzuweisenden Fluoreszenzfarbstoff (F) emittiert worden ist,
**dadurch gekennzeichnet,** daß
die Einrichtung zum Anregen des nachzuweisenden Fluoreszenzfarbstoffs (F) so vorgesehen ist, daß die Oberfläche (112; 212; 312; 412; 512) zum Aufbringen von Proben (P) relativ zu der Einstrahlrichtung (R) bewegbar ist, derart, daß der nachzuweisende Fluoreszenzfarbstoff (F) in unterschiedlichen Teilbereichen der Oberfläche (112; 212; 312; 412; 512) anregbar ist.

2. Vorrichtung nach Anspruch 1, in welcher die Einrichtung (120; 220; 320; 420; 520) zum Detektieren der Oberfläche (112; 212; 312; 412; 512) so gegenüberliegt, daß bei Durchführung einer vollständigen Bewegung der Oberfläche diese vollständig abgetastet wird.

3. Vorrichtung nach Anspruch 1 oder 2, in welcher die Einrichtung (120; 220; 320; 420; 520) zum Detektieren ein lineares Photodiodenfeld oder eine CCD-Zeile aufweist.

4. Vorrichtung nach Anspruch 1 oder 2, in welcher die Einrichtung zum Detektieren einen Detektor, insbesondere eine Photomultiplierröhre, der bzw. die entlang einer vorbestimmten Richtung zum Abtasten der Oberfläche führbar angeordnet ist, aufweist.

5. Vorrichtung nach einem der vorangegangenen Ansprüche, in welcher die Einrichtung zum Detektieren (320) ein Linsen- und/oder Blendensystem (321) aufweist.

6. Vorrichtung nach einem der vorangegangenen Ansprüche, in welcher die Einrichtung zum Detektieren (320) eine auf die Wellenlänge der von ihr nachzuweisenden Fluoreszenzstrahlung abgestimmte Farbfiltereinrichtung (322) aufweist.

7. Vorrichtung nach einem der vorangegangenen Ansprüche, in welcher die Einrichtung (110; 210; 310; 410) zum Anregen des nachzuweisenden Fluoreszenzfarbstoffs (F) so vorgesehen ist, daß die Oberfläche (112; 212; 312; 412) relativ zur Einstrahlrichtung (R) eine Rotationsbewegung (D) ausführt.

8. Vorrichtung nach Anspruch 7, in welcher die Oberfläche (112; 212; 312; 412) rotationssymmetrisch, insbesondere kreisringförmig, ausgebildet ist.

9. Vorrichtung nach Anspruch 7 oder 8, in welcher wenigstens eine weitere Einrichtung (325) zum Detektieren von Fluoreszenzstrahlung, die von dem nachzuweisenden Fluoreszenzfarbstoff (F) oder einem weiteren Fluoreszenzfarbstoff (F') emittiert worden ist, vorgesehen ist.

10. Vorrichtung nach Anspruch 9, in welcher die erste Einrichtung (320) zum Detektieren und jede weitere Einrichtung (325) zum Detektieren parallel zur Oberfläche und unter einem vorbestimmten Winkel zueinander angeordnet sind.

11. Vorrichtung nach einem der Ansprüche 8 bis 10 in Verbindung mit Anspruch 3, in welcher das oder jedes lineare Photodiodenfeld oder die oder jede CCD-Zeile in im wesentlichen radiale Richtung ausgerichtet ist.

12. Vorrichtung nach einem der Ansprüche 8 bis 10 in Verbindung mit Anspruch 4, in welcher der oder jeder Detektor in im wesentlichen radialer Richtung zum Abtasten der Oberfläche führbar vorgesehen ist.

13. Vorrichtung nach einem der Ansprüche 1 bis 6, in welcher die Einrichtung (510) zum Anregen des nachzuweisenden Fluoreszenzfarbstoffs (F) so vorgesehen ist, daß die Oberfläche (520) relativ zur Einstrahlrichtung (R) eine Translationsbewegung (T) ausführt.

14. Vorrichtung nach Anspruch 13, in welcher die Oberfläche (520) im wesentlichen rechteckig ausgebildet ist.

15. Vorrichtung nach Anspruch 14 in Verbindung mit Anspruch 3, in welcher das lineare Photodiodenfeld oder die CCD-Zeile im wesentlichen senkrecht zur Richtung der Translationsbewegung ausgerichtet ist.

16. Vorrichtung nach Anspruch 14 in Verbindung mit Anspruch 4, in welcher der Detektor im wesentlichen senkrecht zur Richtung der Translationsbewegung zum Abtasten der Oberfläche führbar ist.

17. Vorrichtung nach einem der vorangegangenen Ansprüche, in welcher die Einrichtung (120; 220; 320, 325; 420; 520) zum Detektieren und die Bewegung der Oberflache (112; 212; 312; 412; 512) synchronisiert sind, wodurch jeder Ort auf der Oberfläche mit einem Detektionsergebnis von der Einrichtung zum Detektieren in Beziehung steht.

18. Vorrichtung nach einem der vorangegangenen Ansprüche, in welcher die Anregungslichteinkopplungseinrichtung (111; 311; 411; 511), so vorgesehen ist, daß sie relativ zur Oberfläche feststeht.

19. Vorrichtung nach einem der Ansprüche 1 bis 18, in welcher die Anregungslichteinkopplungseinrichtung (211), so vorgesehen ist, daß sie relativ zur Einstrahlrichtung feststeht.

20. Vorrichtung nach Anspruch 19 oder 20, in welcher die Anregungslichteinkopplungseinrichtung (111; 311; 411; 511), in Form eines Gitterkopplers vorgesehen ist.

21. Vorrichtung nach Anspruch 20, in welcher der Gitterkoppler in Form eines holographischen Gitters vorgesehen ist.

22. Vorrichtung nach Anspruch 19 oder 20, in welcher die Anregungslichteinkopplungseinrichtung (211) in Form eines Spiegels vorgesehen ist.

23. Vorrichtung nach einem der vorangegangenen Ansprüche, in welcher die Einrichtung (110; 210; 310; 410; 510) zum Anregen des nachzuweisenden Fluoreszenzfarbstoffs einen auf einem Substrat (117; 217; 317; 417; 517) vorgesehenen Dünnfilm-Wellenleiter (116; 216; 316; 416; 516) aufweist.

24. Vorrichtung nach Anspruch 23, in welcher die Anregungslichteinkopplungseinrichtung das Licht zur Anregung des nachzuweisenden Fluoreszenzfarbstoffs so in den Dünnfilm-Wellenleiter (116; 216; 316; 416; 516) einkoppelt, daß das Licht zur Anregung parallel zur Oberfläche des Dünnfilm-Wellenleiters (116; 216; 316; 416; 516) durch denselben geleitet wird.

25. Vorrichtung nach Anspruch 24, in welcher der Dünnfilm-Wellenleiter (116; 216; 316; 416; 516) so ausgebildet ist und das Licht zur Anregung so eingekoppelt wird, daß sich nur eine Mode des Lichts parallel zur Oberfläche des Dünnfilm-Wellenleiters (116; 216; 316; 416; 516) ausbreitet.

26. Vorrichtung nach einem der Ansprüche 1 bis 22, in welcher die Einrichtung zum Anregen des nachzuweisenden Fluoreszenzfarbstoffs eine Glasplatte aufweist.

27. Vorrichtung nach Anspruch 26, in welcher die Anregungslichteinkopplungseinrichtung das Licht zur Anregung des nachzuweisenden Fluoreszenzfarbstoffs so in die Glasplatte einkoppelt wird, daß es unter Totalreflexion durch dieselbe geleitet wird.

28. Vorrichtung nach einem der vorangegangenen Ansprüche, in welcher eine Auskopplungseinrichtung (330) zur Auskopplung der in die Einrichtung zum Anregen zurückgekoppelten Fluoreszenzstrahlung und eine Einrichtung (340) zum Detektieren dieser Fluoreszenzstrahlung vorgesehen ist.

29. Vorrichtung nach Anspruch 28, in welcher die Auskopplungseinrichtung (330) in Form eines Gitterkopplers, insbesondere in Form eines holographischen Gitterkopplers vorgesehen ist.

30. Vorrichtung nach einem der vorangegangenen Ansprüche, in welcher die Einrichtung zum Detektieren einen Detektor, einen Hohlraum, der eine hochreflektive innere Oberfläche, eine erste, der Einrichtung zum Anregen gegenüberliegende Öffnung und eine zweite, dem Detektor gegenüberliegende Öffnung aufweist.

31. Vorrichtung nach Anspruch 30, in welcher der Detektor in Form einer PhotomultipIiereinrichtung vorgesehen ist.
